# EUROPEAN PATENT SPECIFICATION

(11) **EP 3 269 549 B1**
(45) Date of publication and mention of the grant of the patent: **18.12.2019**
(21) Application number: 16761784.4
(22) Date of filing: 09.03.2016
(51) Int. Cl.: B32B 27/36, B32B 27/08, B32B 15/09, B65D 8/16, B65D 25/14, B65D 25/34

(54) **POLYESTER-BASED FILM FOR LAMINATING METAL PLATE**
FOLIE AUF POLYESTERBASIS ZUR LAMINIERUNG EINER METALLPLATTE
FILM À BASE DE POLYESTER POUR LAMINATION D'UNE PLAQUE MÉTALLIQUE

(30) Priority: 10.03.2015 JP 2015046806
(43) Date of publication of application: 17.01.2018
(73) Proprietor: Toyobo Co., Ltd., Osaka-shi Osaka 530-8230 (JP)
(72) Inventor: NAKAYA, Tadashi, Inuyama-shi Aichi 484-8508 (JP); IKEHATA, Yoshitomo, Inuyama-shi Aichi 484-8508 (JP); NAKANO, Mahiro, Inuyama-shi Aichi 484-8508 (JP)
(74) Representative: Vossius & Partner Patentanwälte Rechtsanwälte mbB
(86) International application number: PCT/JP2016/057358
(87) International publication number: WO 2016/143817

(56) References cited:
- JP-A- 2002 193 255
- JP-A- 2004 122 577
- JP-A- 2004 122 577
- JP-A- 2006 289 989
- JP-A- 2006 289 989

## Description

### TECHNICAL FIELD

The present invention relates to a polyester-based film for laminating a metal plate, and particularly relates to a polyester-based film for laminating a metal plate used to be laminated on the inner surface of a can, in a 3-piece can, for the purpose of corrosion prevention of a metal container for food and drink such as refreshing drink, coffee and canned food, and the like.

### BACKGROUND ART

Conventionally, a coating is generally applied for corrosion prevention of the inner and outer surfaces of a metal can, and a thermosetting resin is used as the coating.

In the method of coating the surface of a metal can with a thermosetting resin, after applying a coating obtained by dissolving a thermosetting resin in a solvent to the surface of a metal can, heating at a high temperature for a long time like not less than 190°C for a few minutes is generally required. Also, since a large amount of an organic solvent scatters at baking, improvements such as process simplification and anti-pollution are demanded.

Also, in a coating film formed in the above conditions, remaining of a small amount of an organic solvent cannot be consequently avoided, and for example, when a metal can on which the coating film is formed is filled with food and drink, the organic solvent may transfer to the content of the metal can, and exert an adverse effect on taste and odor of the food and drink or safety to a human body. Furthermore, since an additive contained in the coating and the low molecular weight substance caused by incomplete crosslinking reaction are contained, these substances may transfer to the content of the metal can, and exert the same adverse effect as in the case of the residual organic solvent described above.

As a means for solving the above problem, there is a method of using a thermoplastic resin film. For example, it is a method of suppressing exertion of the adverse effect of the additive contained in the coating and the low molecular weight substance caused by incomplete crosslinking reaction on the content of the metal can by previously applying a thermosetting adhesive to a polyolefin film such as a polyester-based film or a polypropylene film, and then sticking the film to a metal plate.

However, for example, when a polyolefin film such as polypropylene is used as the thermoplastic resin film, operation environmental problem and process simplification are possible, but transfer of the low molecular weight substance from the inner surface side of the metal can to the content cannot be sufficiently suppressed. Also, such film is inferior in heat resistance, thus, in the case of being subjected to heat history in the can making process and heat history in a retorting treatment after can making and the like, the thermoplastic resin film stuck to the metal plate may peel off.

On the other hand, for example, Patent Documents 1, 2, 3 and 4 each describe a method of laminating a polyester-based laminated film having an upper layer comprising a polyester-based resin, and a lower layer comprising a polyester-based resin and having a function of an adhesive on a metal plate. By using this method, operation environmental problems and process simplification can be achieved, and the problem about heat resistance of a polyester-based film can also be improved. However, there is a possibility that the polyester-based film shrinks or peels off from the metal plate, due to heat treatment for improvement in finishing properties of cans during can-making processing, heat treatment for repairing the joint part of a can using a belt-like film, or the like. It is because the melting point of the lower layer is lower than the heat treatment temperature.

As disclosed in Patent Document 5, when a polyethylene terephthalate-based resin and a polybutylene terephthalate-based resin are contained in combination, after can making, there is a problem that the inner surface of the can is easily corrosive while the can is filled with a content and stored for a long period.

Furthermore, as disclosed in Patent Document 6, when a low-melting point component is together contained in a layer on the opposite side to the adhesive surface to the metal plate, that is, the surface of the side in contact with food and drink, there is a problem that roll stain occurs when a film is laminated on a metal plate at high speed, and it is necessary to clean the roll. It is because the polyester-based block copolymer contained as a low-melting point component is incompatible with the polyester-based resin, and the melting point of the polyester-based block copolymer is as low as 180 to 200°C.

Each of Patent Documents 7, 8 and 9 discloses a polyester film used for metal lamination.

### PRIOR ART DOCUMENT

### PATENT DOCUMENTS

Patent Document 1: JP-A-10-60131
Patent Document 2: JP-A-11-277702
Patent Document 3: JP-A-2000-71406
Patent Document 4: JP-A-2004-9599
Patent Document 5: JP-B-4407269
Patent Document 6: JP-A-2012-251140
Patent Document 7: JP-A-2004-122577
Patent Document 8: JP-A-2002-193255
Patent Document 9:
   JP-A-2006-289989

### SUMMARY OF THE INVENTION

### PROBLEMS TO BE SOLVED BY THE INVENTION

The present invention has been made in view of the situation described above, and an object thereof is to provide a polyester-based film for laminating a metal plate, the polyester-based film having corrosion resistance, being capable of being adhered to a metal plate at a relatively low temperature, having excellent can-making properties, and easily repairing a joint part after can making. Another object of the present invention is to provide a film-laminated metal plate obtained by laminating this polyester-based film on a metal plate and a metal container obtained by molding the film-laminated metal plate.

### SOLUTIONS TO THE PROBLEMS

The invention is defined in the appended claims.

A polyester-based film for laminating a metal plate of the present invention is constituted by two layers of Layer A and Layer B. A resin constituting Layer A is a polyester-based resin having a total content of ethylene terephthalate units and diethylene terephthalate units of not less than 95% by mol and not more than 98% by mol, in 100% by mol of total constituent units of the polyester. The resin constituting Layer A comprises not less than 2% by mol and not more than 5% by mol of ethylene isophthlate units, in 100% by mol of the total constituent units of the polyester. A resin constituting Layer B comprises 80 to 100% by mass of a polyester-based resin (B1) having ethylene terephthalate units of not less than 80% by mol, in 100% by mol of the total constituent units of the polyester, and 0 to 20% by mass of a polyester-based resin (B2) having composition different from composition of the polyester-based resin (B1), and Layer B is used as a layer to be laminated on the metal plate side, the total thickness of Layer A and Layer B has a thickness ratio from 85:15 to 95:5.

It is preferable that a temperature capable of laminating Layer B and a metal plate is not more than 200°C.

It is preferable that the polyester-based resin (B1) comprises not less than 5% by mol and not more than 15% by mol of ethylene isophthalate units, in 100% by mol of the total constituent units of the polyester. It is preferable that the polyester-based resin (B1) comprises polyethylene terephthalate and polyethylene isophthalate.

It is preferable that the polyester-based resin (B2) is polybutylene terephthalate.

The present invention includes a film-laminated metal plate obtained by laminating Layer B of the polyester-based film on at least one surface of a metal plate. Furthermore, the present invention includes a metal container obtained by molding the film-laminated metal plate. Finally, the present invention includes a use of the polyester-based laminated metal plate in a 3-piece can, as defined by appended claim 8.

### EFFECT OF THE INVENTION

The polyester-based film of the present invention has excellent corrosion resistance, and can be adhered to a metal plate at a temperature lower than a conventional temperature. Also, when using the polyester-based film of the present invention, it is possible to make a can at a high speed, and the polyester-based film of the present invention is also suitable for repairing a joint part. Even when performing heat treatment for improvement in finishing properties of cans during can-making processing, performing heat treatment for repairing a joint part of a can, or the like, a film does not shrink or does not peel off from the metal plate. Therefore, it is suitable to use the polyester-based film of the present invention as a film for a metal container for storing drink or food.

### MODE FOR CARRYING OUT THE INVENTION

The polyester-based film for laminating a metal plate of the present invention is a polyester-based film constituted by two layers of Layer A and Layer B. Layer A is a layer having heat resistance in the can-making process, and Layer B has adhesion to the laminate by thermocompression bonding, in addition to the same heat resistance as Layer A. When a metal container is formed from a film-laminated metal plate obtained by laminating such a polyester-based film on a metal plate, Layer A is a layer being in contact with a content such as food or a surface of a container, and Layer B is laminated on the metal plate side.

### (Layer A)

Layer A is formed from a composition containing a polyester-based resin mainly including ethylene terephthalate. Specifically, a resin constituting Layer A is a polyester-based resin having a total content of ethylene terephthalate units and diethylene terephthalate units of not less than 95% by mol and not more than 98% by mol, in 100% by mol of the total constituent units of the polyester. When the total content of ethylene terephthalate units and diethylene terephthalate units is less than 95% by mol, the film may be inferior in heat resistance. Also, when subjecting a film to heat treatment at a high temperature during can making, a trouble such as shrinkage or peeling may occur. As a constituent unit of the polyester, only one of the ethylene terephthalate unit and the diethylene terephthalate unit may be contained.

The composition for forming the polyester-based resin of Layer A contains a polycarboxylic acid other than terephthalic acid and a polyhydric alcohol component other than ethylene glycol and diethylene glycol. Specifically, the resin constituting Layer A contains a unit derived from a polycarboxylic acid other than terephthalic acid and a unit derived from polyhydric alcohol other than ethylene glycol and diethylene glycol.

Examples of the polycarboxylic acid other than terephthalic acid include aromatic polycarboxylic acids such as isophthalic acid, phthalic acid, naphthalenedicarboxylic acid and biphenyldicarboxylic acid; aliphatic dicarboxylic acids such as adipic acid, azelaic acid, sebacic acid, decanedicarboxylic acid, dodecanedicarboxylic acid and dimer acid; alicyclic polycarboxylic acids such as cyclohexanedicarboxylic acid; and the like.

Examples of the polyhydric alcohol other than ethylene glycol and diethylene glycol include aliphatic polyhydric alcohols such as triethylene glycol, propanediol, butanediol, pentanediol, hexanediol, dodecamethylene glycol and neopentyl glycol; alicyclic diols such as cyclohexane dimethanol and cyclohexane diethanol; aliphatic polyhydric alcohols such as trimethylolpropane and pentaerythritol; aromatic polyhydric alcohols such as ethylene oxide adducts of a bisphenol derivative; and the like.

The polyhydric alcohol other than ethylene glycol and diethylene glycol for forming the polyester-based resin of Layer A is structurally a long straight-chain part, and is likely to pass ionic components. Therefore, from the viewpoint of corrosion resistance, the resin constituting Layer A contains ethylene isophthalate units of 2 to 5% by mol and preferably 2 to 3% by mol, in 100% by mol of the total constituent units of the polyester. By including an ethylene isophthalate unit, slipperiness of the film and can-making properties are improved, and even when fine particles described later are contained in Layer A, the fine particles can be prevented from falling from the film.

It is preferred that the resin constituting Layer A comprises ethylene terephthalate units and ethylene isophthalate units, and more specifically, the resin constituting Layer A comprises polyethylene terephthalate and polyethylene isophthalate.

In the polyester-based resin, the unit derived from diethylene glycol generated as a by-product during polymerization is preferably not more than 5% by mol and more preferably not more than 3% by mol, in 100% by mol of the total constituent units of the polyester.

The polyester-based resin may include one kind of polyester polymer alone or may include a mixture of a plurality of polyester polymers. In Layer A, various additives such as lubricant particles and antioxidants may be contained in a ratio of not more than 5% by mass, in 100% by mass of the composition containing the polyester-based resin.

The resin constituting Layer A has an intrinsic viscosity of preferably 0.5 to 0.7 dl/g, more preferably 0.55 to 0.67 dl/g, further preferably 0.57 to 0.65 dl/g, and particularly preferably 0.58 to 0.60 dl/g. When the intrinsic viscosity is less than 0.5 dl/g, film-forming workability becomes very poor, and even when a film can be formed, a thermally degraded substance derived from a low molecular weight substance is generated, thus it may be difficult to use the film as a polyester-based film for laminating a metal plate. In addition, when the intrinsic viscosity exceeds 0.7 dl/g, a low molecular weight substance generated by being thermally decomposed in an extruder is increased and extrusion load is too large, as a result of applying excessive heat and pressure when melting a resin and extruding the melted resin by the extruder in the film forming process. Therefore, it is difficult to extrude a uniform amount of the resin from the extruder, and it may be difficult to obtain a polyester-based film for laminating a metal plate with good quality.

### (Layer B)

Layer B is formed from a composition containing a polyester-based resin mainly including ethylene terephthalate. The resin constituting Layer B comprises 80 to 100% by mass of a polyester-based resin mainly including ethylene terephthalate (hereinafter, referred to as Resin B1) and 0 to 20% by mass of a polyester-based resin having a composition different from that of Resin B1 (hereinafter, referred to as Resin B2). Preferably, the resin constituting Layer B is a polyester-based resin including 85 to 95% by mass of Resin B1 and 5 to 15% by mass of Resin B2.

In Resin B1, the phrase "mainly including ethylene terephthalate" refers that the ethylene terephthalate unit is not less than 80% by mol, in 100% by mol of the total constituent units of the polyester. In Resin B1, it is preferred that the total constituent units of the polyester comprise ethylene terephthalate units and diethylene isophthalate units, and more specifically, Resin B1 comprises polyethylene terephthalate and polyethylene isophthalate.

Resin B1 may contain a unit derived from a polyhydric alcohol other than ethylene glycol and/or a unit derived from a polycarboxylic acid other than terephthalic acid. The unit derived from a polyhydric alcohol other than ethylene glycol refers to an ester unit comprising a polyhydric alcohol other than ethylene glycol and terephthalic acid, and the unit derived from a polycarboxylic acid other than terephthalic acid means an ester unit comprising a polycarboxylic acid other than terephthalic acid and ethylene glycol.

Examples of the polycarboxylic acid other than terephthalic acid include aromatic polycarboxylic acids such as isophthalic acid, phthalic acid, naphthalenedicarboxylic acid and biphenyldicarboxylic acid; aliphatic dicarboxylic acids such as adipic acid, azelaic acid, sebacic acid, decanedicarboxylic acid, dodecanedicarboxylic acid and dimer acid; alicyclic polycarboxylic acids such as cyclohexanedicarboxylic acid; and the like.

Examples of the polyhydric alcohol other than ethylene glycol include aliphatic polyhydric alcohols such as diethylene glycol, triethylene glycol, propanediol, butanediol, pentanediol, hexanediol, dodecamethylene glycol and neopentyl glycol; alicyclic diols such as cyclohexane dimethanol and cyclohexane diethanol; aliphatic polyhydric alcohols such as trimethylolpropane and pentaerythritol; aromatic polyhydric alcohols such as ethylene oxide adducts of a bisphenol derivative; and the like.

Resin B1 is preferably not less than 0% by mol and not more than 20% by mol and preferably not less than 5% by mol and not more than 15% by mol of ethylene isophthalate units, in 100% by mol of the total constituent units of the polyester.

In Resin B2, the phrase "having a different composition from the polyester-based resin mainly consisting of ethylene terephthalate" refers that the ethylene terephthalate unit is less than 20% by mol, in 100% by mol of the total constituent units of the polyester.

Resin B2 contains a unit derived from a polyhydric alcohol other than ethylene glycol and/or a unit derived from a polycarboxylic acid other than terephthalic acid. Specific examples of the polycarboxylic acid other than terephthalic acid and the polyhydric alcohol other than ethylene glycol are the same as those of Resin B1.

Resin B2 is preferably not less than 80% by mol and more preferably 100% by mol of butylene terephthalate unit (Resin B2 is polybutylene terephthalate), in 100% by mol of the total constituent units of the polyester.

In Layer B, various additives such as lubricant particles and antioxidants may be contained in a ratio of not more than 5% by mass, in 100% by mass of the composition containing the polyester-based resin.

When the resin having the above constitution is used as the resin constituting Layer B, flowability of Layer B does not increase much even when heating the film in the can-making process and the like, and the dimensional change of Layer A is unlikely to be larger. Further, when the resin having the above constitution is used as the resin constituting Layer B, Layer B is likely to adhere to a metal plate by heat fusion.

The resin constituting Layer B has a melting point of preferably 220 to 235°C, more preferably 225 to 235°C, and furthermore preferably 225 to 233°C. When the resin constituting Layer B has a melting point of less than 220°C, the flowability of Layer B increases due to heat history in the can-making process and the like, and the dimensional change of Layer A may become larger. On the other hand, when the resin constituting Layer B has a melting point of exceeding 235°C, the melting point of the resin constituting Layer B approaches the melting point of Layer A. Therefore, when adhesion to the metal plate by heat fusion is secured, excessive heat may be given to Layer A.

The resin constituting Layer B has an intrinsic viscosity of preferably 0.5 to 0.7 dl/g, and more preferably 0.55 to 0.65 dl/g. When the intrinsic viscosity is less than 0.5 dl/g, film-forming workability is very poor, and even when a film can be formed, a thermally degraded substance derived from a low molecular weight substance is generated, thus it may be difficult to use the film as a polyester-based film for laminating a metal plate. In addition, when the intrinsic viscosity exceeds 0.7 dl/g, a low molecular weight substance generated by being thermally decomposed in an extruder is increased and extrusion load is too large, as a result of applying excessive heat and pressure when melting a resin and extruding the melted resin by the extruder in the film forming process. Therefore, it is difficult to extrude a uniform amount of the resin from the extruder, and it may be difficult to obtain a polyester-based film for laminating a metal plate with good quality.

The temperature capable of laminating Layer B and a metal plate is preferably not more than 200°C, more preferably not more than 180°C, and further preferably not more than 160°C. A film and a metal plate are adhered each other at a low temperature, whereby a film-laminated metal plate and a metal container can be produced with less energy. The method for measuring the temperature capable of laminating on the metal plate will be described later.

In the present invention, the difference in glass transition temperature (Tg) between the resin constituting Layer A and the resin constituting Layer B (Tg of the resin constituting Layer A- Tg of the resin constituting Layer B) is preferably not more than 10°C, and more preferably not more than 6°C. When the difference in Tg exceeds 10°C, it is not preferred since the produced film is likely to curl, and handleability is deteriorated.

The total thickness of the polyester-based film of the present invention (the total thicknesses of Layer A and Layer B) is usually preferably not less than 10 µm and not more than 25 µm. When the total thickness is less than 9 µm, the film is inferior in gas barrier properties and deteriorated in corrosion resistance, and further, a low molecular weight substance from a metal container may permeate drink and food. On the other hand, even when the total thickness of the film exceeds 25 µm, corresponding improving effect is not obtained, and it becomes disadvantage in terms of manufacturing cost.

Further, the thickness ratio of each layer of the polyester-based film for laminating a metal plate of the present invention is Layer A:Layer B = 85:15 to 95:5. When the thickness ratio of each layer is in the above range, adhesion, heat resistance and the like are good which are required when laminating the film on the metal plate, and molding and processing the laminate. When the thickness ratio of Layer A exceeds 95%, more specifically, when the thickness ratio of Layer B is less than 5%, adhesion between the metal plate and the film may not be sufficiently secured. When the thickness ratio of Layer A is less than 75%, more specifically, when the thickness ratio of Layer B exceeds 25%, aroma retaining property may not be sufficiently secured.

Layer A of the polyester-based film in the present invention to form an outer surface of the film-laminated metal plate when forming the film-laminated metal plate can prevent scratch on the film in the can-making process or the like, contamination of an apparatus for making a can due to shaving of the film in the can-making process, and the like. Therefore, it is practical that the polyester-based film surface (Layer A surface) has a dynamic friction coefficient at 80°C of preferably not more than 0.45, more preferably not more than 0.43, and further preferably not more than 0.40. The polyester-based film surface having a dynamic friction coefficient of not more than 0.45 can prevent scratch on the film in the can-making process or the like, contamination of an apparatus for making a can due to shaving of the film in the can-making process, and the like.

Examples of methods of allowing Layer A surface of the polyester-based film for laminating a metal plate of the present invention to have a dynamic friction coefficient of not more than 0.45 may include methods such as a method of involving fine particles described later into the film, and a method of forming fine spherulites of the polyester-based resin. Among these methods, the method of incorporating fine particles into the film is preferable. Can-making processability can be improved by containing fine particles or the spherulites, and flaw resistance (scratch resistance) can be imparted. These inorganic fine particles may be used alone or two or more kinds thereof may be used.

The fine particles are not particularly limited as long as they are insoluble in polyester and inactive, and examples thereof include amorphous inorganic particles and crosslinked polymer particles. In order to adjust the particle size and particle size distribution of the fine particles, pulverization, classification and the like may be performed.

Examples of materials for forming the amorphous inorganic particles include metal oxides such as silica, alumina, zirconia and titanium oxide; composite oxides such as kaolin, zeolite, sericite and sepiolite; sulfates such as calcium sulfate and barium sulfate; phosphates such as calcium phosphate and zirconium phosphate; carbonates such as calcium carbonate, and the like, and among them, metal oxides are preferable. These inorganic fine particles may be a natural material or a synthetic material.

Moreover, examples of the crosslinked polymer particles include acrylic monomers such as acrylic acid, methacrylic acid, acrylic acid ester and methacrylic acid ester, styrenic monomers such as styrene and alkyl-substituted styrenes, copolymers with crosslinkable monomers such as divinylbenzene, divinylsulfone, ethylene glycol dimethacrylate, trimethylolpropane trimethylacrylate or pentaerythritol tetramethylacrylate; melamine-based resins, benzoguanamine-based resins, phenolic resins, silicone-based resins, and the like, and among them, (co)polymers of acrylic monomers are preferred.

As the fine particles, the shape of each of the particles is preferably amorphous, and in the case of spherical shape, it is not preferable since damage to the film and falling from the film occur. The amorphous shape in the present invention refers to a shape other than a perfect spherical shape.

The average particle diameter of the fine particles is preferably 0.5 to 5.0 µm and more preferably 0.8 to 4.0 µm. When the average particle diameter is less than 0.5 µm, improving effect of slipperiness between the film and the metal plate at a high temperature is reduced, and the film may be likely to be damaged. On the other hand, when the average particle diameter exceeds 0.5 µm, the above effect may be saturated, the fine particles may easily fall off from the film, the film may be easily ruptured during film formation, and impact strength may be reduced.

The content of the fine particles is preferably 0.5 to 2.0% by mass and more preferably 0.75 to 1.5% by mass, in 100% by mass of the composition containing the polyester-based resin, for both Layer A and Layer B. When the content is less than 0.5% by mass, improving effect of slipperiness between the film and the metal plate at a high temperature is reduced, and the film may be likely to be damaged. When the content exceeds 2.0% by mass, the above effect may be saturated, film-forming properties may be reduced, impact strength may be reduced, or the like. Also, by appropriately adding crosslinked polymer particles and/or inorganic fine particles so as to have appropriate cloudiness, more specifically, a haze of 25 to 60%, it is possible to prevent a malfunction of a defect detector that detects a processing defect of a metal laminate plate obtained by laminating a film on a metal plate.

In blending of the fine particles to the composition, the fine particles may be added in the process of producing a polyester-based resin, or the fine particles may be added after preparing a polyester-based resin composition, and melt-kneaded. A polyester-based resin composition containing the fine particles at a high concentration is produced, and the obtained polyester-based resin as a master batch can be also melt-knead with a polyester-based resin composition without containing the component or containing a small amount of the component.

The polyester-based film for laminating a metal plate of the present invention can contain antioxidant, heat stabilizer, UV absorber, plasticizer, pigment, antistatic agent, lubricating agent, crystal nucleating agent and the like, as necessary.

### (Method for Producing Polyester-Based Film)

As a method for producing the polyester-based film of the present invention, a raw material chip of each polyester to be used is dried using a dryer such as a hopper dryer or a paddle dryer, or a vacuum dryer, so that the residual moisture content is not more than 150 ppm, and extruded into a film shape at a temperature of 270 to 300°C using an extruder. When a raw material chip with a residual moisture content exceeding 150 ppm, the viscosity of the film to be obtained is lowered, and a trouble such as breakage during production may occur. Also, the strength of the film may be reduced, and a trouble such as film breakage may occur when the film is laminated on a metal plate. As the production method other than the above methods, there is a method of extruding an undried polyester raw material chip into a film shape at a temperature of 270 to 300°C while removing moisture in a vented extruder. For extrusion, any known method such as a T-die method or a tubular method may be adopted. After extrusion, the film is quenched to obtain an unstretched film.

A method of stretching the polyester-based film of the present invention is not particularly limited, and the polyester-based film is preferably formed into a biaxially stretched film. In biaxially stretching, either of sequentially biaxially stretching method and simultaneously biaxially stretching method may be used, but it is preferred to use a sequentially biaxially stretching method since the range of producible thickness is wide. In this case, the stretch ratio in the vertical direction is preferably 2 to 5 times and more preferably 2.5 to 4 times, and the stretch temperature is preferably 80 to 120°C and more preferably 90 to 110°C. The stretch ratio in the horizontal direction is preferably 2 to 5 times and more preferably 3 to 4.5 times, and the stretch temperature is preferably 80 to 120°C and more preferably 90 to 110°C.

In the polyester-based film for laminating a metal plate of the present invention constituted by two layers of Layer A/Layer B, a residual shrinkage stress due to biaxial stretching of Layer A is preferably reduced or eliminated by a heat fixing method or the like. It is because this can reduce the dimensional change of the film due to heat history in the can-making process and the like. When the residual shrinkage stress is reduced or eliminated by, for example, heat fixing of Layer A, Layer B is preferably converted to amorphous or made to be unoriented by heat history thereof or the like. Accordingly, when the film is laminated on a preheated metal plate, sufficient laminate adhesive force can be obtained even without preheating the metal plate until the metal plate reaches the melting point of Layer B, and a laminate process can speed up. In order to reduce or eliminate the residual shrinkage stress by biaxial stretching of Layer A and amorphize or remove orientation of Layer B, the film is heat fixed preferably in the temperature conditions of not less than a temperature lower than the melting point of the polyester constituting Layer B by 5°C and not more than a temperature lower than the melting point of the polyester constituting Layer A by 15°C, and more preferably in the temperature conditions of not less than a temperature lower than the melting point of the polyester constituting Layer B by 2°C and not more than a temperature lower than the melting point of the polyester constituting Layer A by 20°C. This can achieve impact strength, as well as securing of so-called lamination operability or handleability. Further, each of the melting points of Layer A and Layer B is preferably a temperature at which a preferred heat fixing temperature is selectable.

The melting point of Layer A means a melting point in which the crystal melting peak area measured by DSC is the largest when there is a plurality of polyester-based resins that constitute the layer, and the melting point of Layer B means a melting point in which the crystal melting peak area measured by DSC is the largest when there is a plurality of polyester-based resins that constitute the layer.

### (Film-Laminated Metal Plate)

A film-laminated metal plate according to the present invention can be obtained by laminating the polyester-based film on at least one surface of a metal plate, and is excellent in can-making processability. The film-laminated metal plate is preferably obtained by laminating Layer B of the polyester-based film on at least one surface of a metal plate.

The metal plate used for the film-laminated metal plate is not particularly limited, but examples thereof include tin plate, tin-free steel, aluminum, and the like. Also, the thickness thereof is not particularly limited, but is preferably 100 to 500 µm and more preferably 150 to 400 µm, in terms of economic efficiency represented by cost of material, can-making processing speed and the like, on the other hand, securing material strength.

In addition, as a method for laminating the polyester-based film on at least one surface of a metal plate, a known method can be applied, and the method is not particularly limited, but examples preferably include a thermal laminate method and particularly preferably include a method of electrically heating a metal plate to be thermally laminated. Further, the polyester-based film may be laminated on both surfaces of the metal plate. When the polyester-based film is laminated on both surfaces of the metal plate, the lamination may be performed simultaneously or sequentially.

Moreover, when the polyester-based film constituted by two layers of Layer A/Layer B is laminated on at least one surface of the metal plate, Layer B is preferably used as a layer to be laminated on the metal plate side as described above. In this case, in order to allow Layer B to have superior barrier properties and superior corrosion resistance, and further improved adhesion to the laminate, Layer B may be previously coated with a known adhesive containing a thermosetting resin as a main component before laminating the film.

The metal container of the present invention can be obtained by molding using the film-laminated metal plate. The shape of the metal container is not particularly limited, but for example, the metal container can be formed into a can shape, a bottle shape, a barrel shape or the like. Also, the method for molding a metal container is not particularly limited, but for example, a known method such as drawing forming method, ironing forming method or drawing and ironing forming method can be used.

### EXAMPLES

The present invention will be described below more specifically with reference to examples, but the present invention is not limited to the following examples. The present invention can be put into practice after appropriate modifications or variations within a range meeting the gist described above and below, all of which are included in the technical scope of the present invention.

The evaluation methods and physical property measuring methods of the sample material obtained in each example and comparative example are as described below.

### (1) Method for Measuring Average Particle Size (Diameter) of Inorganic Fine Particles

The average particle diameter of inorganic fine particles was measured using a particle size distribution meter (SZ-100, manufactured by HORIBA, Ltd.).

### (2) Method for Measuring Melting Point

The melting point was measured using differential scanning calorimeter model DSC-60 manufactured by SHIMADZU CORPORATION. Polyesters used in Examples 1, 2 and Comparative Examples 1 to 5 as raw materials (hereinafter, referred to as raw material polyesters) were heated and melted at 300°C for 5 minutes, and then quenched with liquid nitrogen. Using 10 mg of the quenched polyesters as a sample, an endothermic peak temperature (melting point) based on crystal fusion appeared when the temperature was raised at a rate of 20°C/min was measured. The melting point of the film was also measured in the same manner as the melting point of the raw material polyester, except for using samples scraped off from layer A and layer B in place of the raw material polyester.

### (3) Method for Measuring Glass Transition Temperature

The glass transition temperature was measured using a differential scanning calorimeter (model DSC-60) manufactured by SHIMADZU CORPORATION. A raw material polyester was heated and melted at 300°C for 5 minutes, and then quenched with liquid nitrogen. Using 10 mg of the quenched polyesters as a sample, the temperature was raised at a rate of 20°C/min, a glass transition temperature (Tg) was measured from the DSC chart, according to a testing method for glass transition temperatures of plastics described in JIS K 7121. The glass transition temperature of the film was also measured in the same manner as the glass transition temperature of the raw material polyester, except for using samples scraped off from the layer A and the layer B in place of the raw material polyester.

### (4) Composition Analysis of Polyester-based resin

A sample solution was prepared by dissolving about 30 mg of a sample in a solvent mixture of chloroform D (manufactured by Yurisoppu Co., Ltd.) and trifluoroacetic acid D1 (manufactured by Yurisoppu Co., Ltd.) at 10:1 (volume ratio). Then, using a nuclear magnetic resonance (NMR) apparatus (GEMINI-200 manufactured by Varian), NMR of protons in the sample solution was measured under the conditions of a temperature of 23°C and a number of integrations of 64. In the NMR measurement, a prescribed peak intensity of protons was calculated, and the contents (% by mol) of the terephthalic acid component and the isophthalic acid component in 100% by mol of the acid components were calculated.

### (5) Method for Measuring Intrinsic Viscosity

A raw material polyester was dissolved in a mixed solvent of phenol (60% by mass) and 1,1,2,2-tetrachloroethane (40% by mass) so as to have a concentration of 0.4 g/dl, and the intrinsic viscosity was measured at a temperature of 30°C using an Ubbelohde's viscometer. The unit of intrinsic viscosity is dl/g.

### (6) Method for Measuring Moisture Content

A raw material polyester immediately after terminating the drying process was sampled in a container, and the container was sealed until moisture content measurement. About 2 g of this raw material polyester was weighted, and the moisture content was measured at a vaporization temperature of 230°C, using a Karl Fischer moisture meter, a moisture measuring device manufactured by Mitsubishi Chemical Analytech Co., Ltd.

### (7) Physical Properties of Film

### (7-1) Method for measuring haze

A haze was measured using a haze meter (300A manufactured by NIPPON DENSHOKU INDUSTRIES CO., LTD.) according to JIS K 7136. The measurement was performed twice, and the average value thereof was obtained.

### (7-2) Method for measuring temperature capable of film laminating on metal plate

A degreased metal plate with a thickness of 190 µm (tin free steel, L type bright finish, surface roughness of 0.3 to 0.5 µm, manufactured by NIPPON STEEL & SUMITOMO METAL CORPORATION) was preheated to 140°C, and the metal plate was placed on Layer B surface of the polyester-based film constituted by two layers of Layer A and Layer B. The laminated product was passed in between rubber rolls under conditions at a pressure of 500 N/cm and a speed of 10 m/minute, and quickly cooled with water to give a film-laminated metal plate [thickness of 202 µm (polyester-based film/metal plate =12 µm/190 µm)].

The center of the film surface side of the resulting film-laminated metal plate was cut into 15 mm width horizontally in relation to the film laminate advancing direction with a razor. A 15 mm width part of the film is gradually cut from the film-laminated plate while applying water, and peeled about 5 cm in the longitudinal direction. The resulting sample was set in a Tensilon STM-T-50 manufactured by BALDWIN JAPAN LTD so that the angle between the end portion of the peeled film and the film-laminated metal plate was 180°, and the 180° peel strength was measured at a tensile speed of 200 mm/minute.

Thereafter, the preheating temperature was raised from 140°C by 10°C, and the peel strength was measured in the same manner as above. The temperature at which the peel strength was not less than 0.10 N/15 mm was defined as a temperature capable of film laminating on a metal plate.

### (7-3) Method for measuring thickness of each layer of film

An ultrathin cross-sectional slice of the polyester-based film was observed using a transmission electron microscope (model HU-12) manufactured by Hitachi, Ltd., and the thickness (µm) of each layer of the film was measured.

### (8) Film Laminate Metal Plate

### (8-1) Method for measuring dynamic friction coefficient

The film-laminated metal plate obtained in the above-mentioned (7-2) was cut into a 150 mm × 100 mm rectangle to give a sample, wherein the longer sides were in parallel relation to the vertical stretching direction of the film (in the case of the biaxially stretched film), the stretching direction of the film (in the case of the uniaxially stretched film), or the film-forming direction (in the case of the unstretched film). Subsequently, the sample was set to a sliding member with a mass of 1.5 kg having a contact area of 50 mm × 70 mm with the sample on the surface so that the vertical stretching direction of the film (in the case of the biaxially stretched film), the stretching direction of the film (in the case of the uniaxially stretched film), or the film-forming direction (in the case of the unstretched film) was in parallel with the sliding direction, and a dynamic friction coefficient when the sliding member was slid on a tin free steel plate at 80°C at a rate of 250 mm/min was measured. The preheating temperature of the metal plate during the preparation of the film-laminated metal plate was set to the temperature capable of film laminating on a metal plate measured in the above-mentioned (7-2).

### (8-2) Rubber roll stain

After preparing the film-laminated metal plate as in the above-mentioned (7-2), whether or not a foreign matter adhered to the rubber roll was visually confirmed.
A: Stain cannot be confirmed
B: Stains are partially adhered
C: Stains are entirely adhered

### (8-3) High-speed can making properties

The film-laminated metal plate obtained as in the above-mentioned (7-2) was used in a bottom lid, a can body and an upper lid, to make a can as a 3-piece can for 185 g. After making a can, it was observed for the presence or absence of a scratch on the surface of the film.
A: Scratch cannot be confirmed
B: Small scratch is seen
C: Scratch is seen

### (9) Metal Container after Can Making

### (9-1) Shrinkage/peeling of film at repairing

Repairing of a joint part of the metal container (3-piece can) obtained as in the above-mentioned (8-3) was performed using an epoxy resin repairing tape. Appearance of the film in the joint repairing part was visually observed.
A: No change in appearance
B: Misalignment due to shrinkage of film is observed
C: Peeling due to shrinkage of film is observed

### (9-2) Peeling of repairing tape at repairing

Repairing of a joint part of the metal container (3-piece can) was performed as in the above-mentioned (9-1). Appearance of the epoxy resin repairing tape in the joint repairing part was visually observed.
A: No change in appearance
B: Floating of repairing tape is observed
C: Peeling of repairing tape is observed

### (9-3) Corrosion resistance

A 3-piece can for 350 ml is made using the film-laminated metal plate obtained as in the above-mentioned (7-2) such that the film-laminated surface faces inward, and the resulting 3-piece can is filled with carbonated water containing 5% by mass of salt (carbon dioxide gas concentration of 1000 ppm) as a content, and subjected to a retorting treatment at 140°C for 10 minutes, then stored at 80°C for 2 weeks. Thereafter, the carbonated water filled in the 3-piece can was drained, and the can was opened by cutting, and washed with water. Then, the film-laminated surface was observed, and corrosion resistance was determined based on the criteria shown below.
A: Discoloration of film surface is not observed
B: Discoloration of film surface is observed

### (Example 1)

### (Production of Polyester-Based Film)

As the resin for Layer A, a mixture of the following three kinds of Resins C to E was used.
Resin C: A PET resin (50 parts by mass) (SU554A manufactured by TOYOBO CO., LTD.) added with aggregation type silica particles having an average particle diameter of 2.7 µm (hereinafter, referred to as aggregated silica particles) (Sylysia 310, manufactured by Fuji Silysia Chemical Ltd.) Resin D: A copolymerized polyester-based resin (30 parts by mass) obtained by adding the aggregated silica particles to a copolymer of terephthalic acid polymerized with a Ge catalyst (hereinafter, referred to as TPA)/isophthalic acid (hereinafter, referred to as IPA) (molar ratio of 90/10) and ethylene glycol (RF230 manufactured by TOYOBO CO., LTD.)
Resin E: A PET resin (20 Parts by mass) obtained by further adding the aggregated silica particles and polymethylmethacrylate particles (Epostar (registered trademark) MA1002, manufactured by NIPPON SHOKUBAI CO., LTD., average particle diameter of 2.0 µm, refractive index 1.51) to Resin C

Resin C was a PET resin having an intrinsic viscosity of 0.67 dl/g, a melting point of 254°C, and a glass transition temperature of 76°C, and the aggregated silica particles were contained in an amount of 0.2 parts by mass in 100 parts by mass of the resin.

Resin D was a copolymerized polyester-based resin having an intrinsic viscosity of 0.63 dl/g, a melting point of 233°C, and a glass transition temperature of 70°C, and the aggregated silica particles were contained in an amount of 0.17 parts by mass in 100 parts by mass of the resin.

Resin E was a PET resin having an intrinsic viscosity of 0.60 dl/g, and the aggregated silica particles were contained in an amount of 0.7 parts by mass and the polymethyl methacrylate particles were contained in an amount of 5.0 parts by mass in 100 parts by mass of the resin.

As the resin for the layer B, a mixture of the following two kinds of Resins J and K was used. This mixture had an intrinsic viscosity of 0.60 dl/g, a melting point of 227°C, and a glass transition temperature of 67°C. Resin J: 90 Parts by mass of a copolymerized polyester-based resin (RF230 manufactured by TOYOBO CO., LTD.)
Resin K: 10 Parts by mass of a PBT resin (NOVADURAN (registered trademark) 5007A manufactured by Mitsubishi Engineering-Plastics Corporation)
Resin J was a copolymerized polyester-based resin of TPA/IPA polymerized with a Ge catalyst (molar ratio of 90/10) and ethylene glycol, and had an intrinsic viscosity of 0.63 dl/g, a melting point of 233°C, and a glass transition temperature of 70°C. Also, Resin K was a PBT resin polymerized with a Ti catalyst, and had an intrinsic viscosity of 0.70 dl/g, a melting point of 222°C, and a glass transition temperature of 30°C.

The polyester for layer A was dried with a paddle dryer. The moisture content after drying was 48 ppm. Next, the dried polyester was melted using a uniaxial extruder at a resin temperature of 275°C for a residence time of 15 minutes while being fed by a constant screw feeder. The polyester for layer B was fed to separate hoppers, and the polyester was mixed in the hoppers while being continuously separately fed to a funnel-shaped hopper just above the extruder by a constant screw feeder so as to be the described ratio, and the undried polyester was melted at a resin temperature of 280°C for a residence time of 15 minutes while moisture was removed in a vented extruder. This melted body was joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a polyester-based film with layer A thickness of 10.5 µm and layer B thickness of 1.5 µm (total thickness of 12 µm), namely, thickness ratio of each layer, layer A: layer B = 87.5 : 12.5. Breakage did not occur during film production.

The haze of the resulting film was measured to be 51%. Also, the temperature capable of laminating the resulting film on metal was measured to be 160°C.

### (Production of Film-Laminated Metal Plate)

A degreased metal plate with a thickness of 190 pm (tin free steel, L type bright finish, surface roughness of 0.3 to 0.5 µm, manufactured by NIPPON STEEL & SUMITOMO METAL CORPORATION) was preheated to the temperature capable of film laminating on a metal plate measured in the above-mentioned (7-2), and the metal plate was placed on Layer B surface of the polyester-based film. The laminated product was passed in between rubber rolls under conditions at a pressure of 500 N/cm and a speed of 10 m/minute, and quickly cooled with water to give a film-laminated metal plate [thickness of 202 µm (polyester-based film/metal plate = 12 µm/190 µm)]. At that time, handleability was good, without causing problems such as breakage of the film and the like. Also, a block copolymer in the film did not adhere on the rubber roll, and high-speed can-making properties were also good. The dynamic friction coefficient of the surface of the film-laminated metal plate at 80°C was 0.39.

### (Production of Metal Container)

The resulting film-laminated metal plate was used in the inner and outer surfaces of a bottom lid and the inner surface of a can body to make a can as a 3-piece can for 185 g. Problems such as shrinkage of the film at the joint part of the metal container, surface exposure of the metal plate and peeling of repairing tape did not occur. Also, corrosion resistance was good.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

### (Example 2)

A polyester-based film was prepared in the same manner as in Example 1, except for using a mixture of 40 parts by mass of Resin C, 24 parts by mass of Resin D, and 16 parts by mass of Resin E, and 20 parts by mass of recycled raw materials of the polyester-based film obtained in Example 1 (hereinafter, referred to as Resin F) (containing 10 parts by mass of Resin C, 6 parts by mass of Resin D, and 4 parts by mass of Resin E) when preparing Layer A, and using 100 parts by mass of Resin J as the resin for Layer B. Resin F had an intrinsic viscosity of 0.60 dl/g, a melting point of 248°C, a glass transition temperature of 72°C, and a content of a unit other than ethylene terephthalate units and diethylene terephthalate units of 3.75% by mol.

Each polyester for Layer A was dried with a separate paddle dryer. The moisture contents of dried polyethylene terephthalate and the recycled raw materials of the film were 44 ppm and 35 ppm, respectively. While these dried polyesters were continuously separately fed to a funnel-shaped hopper just above the extruder by a constant screw feeder so as to be the predetermined ratio, the polyesters were mixed in this hopper, and melted using a uniaxial extruder at a resin temperature of 280°C and a residence time of 16.5 minutes. The polyester for Layer B was melted in the same manner as in Example 1. These melted bodies were joined in a die, then extruded on a cooling drum, and formed into an amorphous sheet. Thereafter, the amorphous sheet was stretched 3.5 times in the vertical direction at 110°C, stretched 4.1 times in the horizontal direction at 130°C, and heat fixed at 233°C, to prepare a polyester-based film with a Layer A thickness of 10 µm and a Layer B thickness of 2 µm (total thickness of 12 µm), more specifically, a thickness ratio of each layer, Layer A:Layer B = 83.3:16.7. Breakage did not occur during film production.

The haze of the resulting film was measured to be 48%. Also, the temperature capable of laminating the resulting film on metal was measured to be 160°C.

### (Production of Film-Laminated Metal Plate)

A film-laminated metal plate was obtained in the same manner as in Example 1. At that time, handleability was good, without causing problems such as breakage of the film and the like. Also, a block copolymer in the film did not adhere on the rubber roll, and high-speed can-making properties were also good. The dynamic friction coefficient of the surface of the film-laminated metal plate at 80°C was 0.40.

### (Production of Metal Container)

A can was formed as a 3-piece can for 185 g in the same manner as in Example 1. Problems such as shrinkage of the film at the joint part of the metal container, surface exposure of the metal plate and peeling of repairing tape did not occur. Also, corrosion resistance was good.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

### (Comparative Example 1)

A polyester-based film was prepared in the same manner as in Example 1, except for using a mixture of 76 parts by mass of Resin C, 20 parts by mass of Resin E, and 4 parts by mass of Resin G described below when preparing Layer A. No breakage occurred during film production.

Resin G: Into a reactor equipped with an inlet, a thermometer, a pressure gauge, a distillation tube with a rectifying column, and an impeller were charged 75 parts by mass of 1,4-butanediol, 75 parts by mass of polytetramethylene glycol (weight average molecular weight of 1000) and 0.05 parts by mass of n-butyl titanate, based on 100 parts by mass of dimethyl terephthalate, and a transesterification reaction was carried out at 190°C to 230°C while distilling methanol to the outside of the system. After completion of the reaction, 0.05 parts by mass of tetra n-butyl titanate and 0.025 parts by mass of phosphoric acid were added, and a polycondensation reaction was performed at 250°C under reduced pressure (not more than 1.0 hPa) to give a polytetramethylene terephthalate-polytetramethylene oxide block copolymer. The resulting polytetramethylene terephthalate-polytetramethylene oxide block copolymer contained a ratio of polytetramethylene oxide of 40% by mass and had an intrinsic viscosity of 1.90 dl/g.

The haze of the resulting film was measured to be 55%. The temperature capable of laminating the resulting film on metal was measured to be 160°C. In the production of the film-laminated metal plate of the polyester-based film, while handleability was good, without causing problems such as breakage of the film and the like, a problem such that a block copolymer in the film adhered to the entire rubber roll was observed. The dynamic friction coefficient of the surface of the film-laminated metal plate at 80°C was 0.35. Incidentally, evaluation for high-speed can-making properties as well as production and evaluation for metal containers were not performed.

In the resulting polyester-based film, raw materials included in Layer A and Layer B are shown in Table 1. Also, physical properties of the resulting polyester-based film and evaluation results of film-laminated metal plate obtained by molding the polyester-based film are shown in Table 2.

### (Comparative Example 2)

The same procedure was carried out as in Example 1, except for using 65 parts by mass of Resin C, 20 parts by mass of Resin E, and 15 parts by mass of NOVADURAN (registered trademark) 5020HF manufactured by Mitsubishi Engineering-Plastics Corporation (hereinafter, referred to as Resin H), which is a PBT resin, without using Resin D, when preparing layer A, in Example 1. Breakage did not occur during film production.

Also, Resin H was a PBT resin having an intrinsic viscosity of 1.20 dl/g, a melting point of 224°C, and a glass transition temperature of 30°C.

Each polyester for layer A was dried with a separate paddle dryer. The moisture contents of dried polyethylene terephthalate and the recycled raw materials of the film were 38 ppm and 39 ppm, respectively. These dried polyesters were continuously separately fed to a funnel-shaped hopper just above the extruder by a constant screw feeder so as to be the predetermined ratio, the polyester was mixed in this hopper, and melted using a uniaxial extruder at a resin temperature of 285°C for a residence time of 15.7 minutes. The polyester for layer B was melted in the same manner as in Example 1. These melted bodies were joined in a die, then extruded on a cooling drum, and formed into an indeterminate sheet. Thereafter, the indeterminate sheet was stretched 3.5 times in the vertical direction at 110°C, stretched 4.1 times in the horizontal direction at 130°C, and heat fixed at 230°C, to prepare a polyester-based film with layer A thickness of 10.5 µm and layer B thickness of 1.5 µm (total thickness of 12 µm), namely, thickness ratio of each layer, layer A: layer B = 87.5 : 12.5. Breakage did not occur during film production.

The haze of the resulting film was measured to be 50%. Also, the temperature capable of laminating the resulting film on metal was measured to be 160°C.

### (Production of Film-Laminated Metal Plate)

A film-laminated metal plate was obtained in the same manner as in Example 1. At that time, handleability was good, without causing problems such as breakage of the film and the like. Also, a block copolymer in the film did not adhere on the rubber roll, and high-speed can-making properties were also good. The dynamic friction coefficient of the surface of the film-laminated metal plate at 80°C was 0.39.

### (Production of Metal Container)

A can was formed as a 3-piece can for 185 g in the same manner as in Example 1. Problems such as shrinkage of the film at the joint part of the metal container, surface exposure of the metal plate and peeling of repairing tape did not occur. However, when corrosion resistance evaluation was performed, discoloration occurred in the film surface, and was problematic.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

### (Comparative Example 3)

A film was prepared in the same manner as in Example 1, except for using 80 parts by mass of Resin C and 20 parts by mass of Resin E, without using Resin D, when preparing Layer A. Breakage did not occur during film production.

The haze of the resulting film was measured to be 52%. Also, the temperature capable of laminating the resulting film on metal was measured to be 160°C.

### (Production of Film-Laminated Metal Plate)

A film-laminated metal plate was obtained in the same manner as in Example 1. At that time, handleability was good, without causing problems such as breakage of the film and the like. Also, a block copolymer in the film did not adhere on the rubber roll, and high-speed can-making properties were also good. The dynamic friction coefficient of the surface of the film-laminated metal plate at 80°C was 0.35.

### (Production of Metal Container)

A can was formed as a 3-piece can for 185 g in the same manner as in Example 1. There was no shrinkage of the film at the joint part of the metal container and surface exposure of the metal plate, but peeling of repairing tape occurred.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

### (Comparative Example 4)

A film was prepared in the same manner as in Example 1, except for using 100 parts by mass of a copolymerized polyester-based resin (hereinafter, referred to as Resin I) obtained by adding the aggregated silica particles to a copolymer of TPA/IPA (molar ratio of 88/12) and ethylene glycol so that the aggregated silica particles were added in an amount of 0.80 parts by mass in 100 parts by mass of the resin when preparing Layer A; using 100 parts by mass of Resin I when preparing Layer B; and further changing the heat fixing temperature after stretching to 210°C. Breakage did not occur during film production. Also, Resin I was a copolymerized polyester-based resin having an intrinsic viscosity of 0.63 dl/g, a melting point of 229°C, and a glass transition temperature of 76°C.

The haze of the resulting film was measured to be 23%. Also, the temperature capable of laminating the resulting film on metal was measured to be 150°C.

### (Production of Film-Laminated Metal Plate)

A film-laminated metal plate was obtained in the same manner as in Example 1. However, stain occurred in the lamination process, and scratches also occurred in the can-making process. The dynamic friction coefficient of the surface of the film-laminated metal plate at 80°C was 0.43.

### (Production of Metal Container)

A can was formed as a 3-piece can for 185 g in the same manner as in Example 1. When repairing the joint part of the metal container, peeling due to melting of Layer B of the film and misalignment of the film due to shrinkage of Layer A occurred, thus the joint part could not be repaired.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

### (Comparative Example 5)

A film was prepared in the same manner as in Example 1, except for using 100 parts by mass of only Resin D when preparing Layer A; and using 100 parts by mass of only a copolymerized polyester-based resin (hereinafter, referred to as Resin L) obtained by adding the aggregated silica particles to a copolymer of TPA/IPA (molar ratio of 78/22) and ethylene glycol so that the aggregated silica particles were added in an amount of 0.8 parts by mass in 100 parts by mass of the resin when preparing Layer B. Breakage did not occur during film production. Also, Resin L was a copolymerized polyester-based resin having an intrinsic viscosity of 0.63 dl/g, a melting point of 200°C, and a glass transition temperature of 74°C.

The haze of the resulting film was measured to be 19%. Also, the temperature capable of laminating the resulting film on metal was measured to be 140°C.

### (Production of Film-Laminated Metal Plate)

A film-laminated metal plate was obtained in the same manner as in Example 1. However, stain occurred in the lamination process, and scratches also occurred in the can-making process. The dynamic friction coefficient of the surface of the film-laminated metal plate at 80°C was 0.43.

### (Production of Metal Container)

A can was formed as a 3-piece can for 185 g in the same manner as in Example 1. When repairing the joint part of the metal container, peeling due to melting of Layer B of the film occurred, thus the joint part could not be repaired.

In the resulting polyester-based film, raw materials included in Layer A and Layer B are shown in Table 1. Also, the physical properties of the resulting polyester-based film and the evaluation results of a film-laminated metal plate obtained by molding the polyester-based film and a metal container obtained by molding the film-laminated metal plate are shown in Table 2.

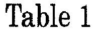

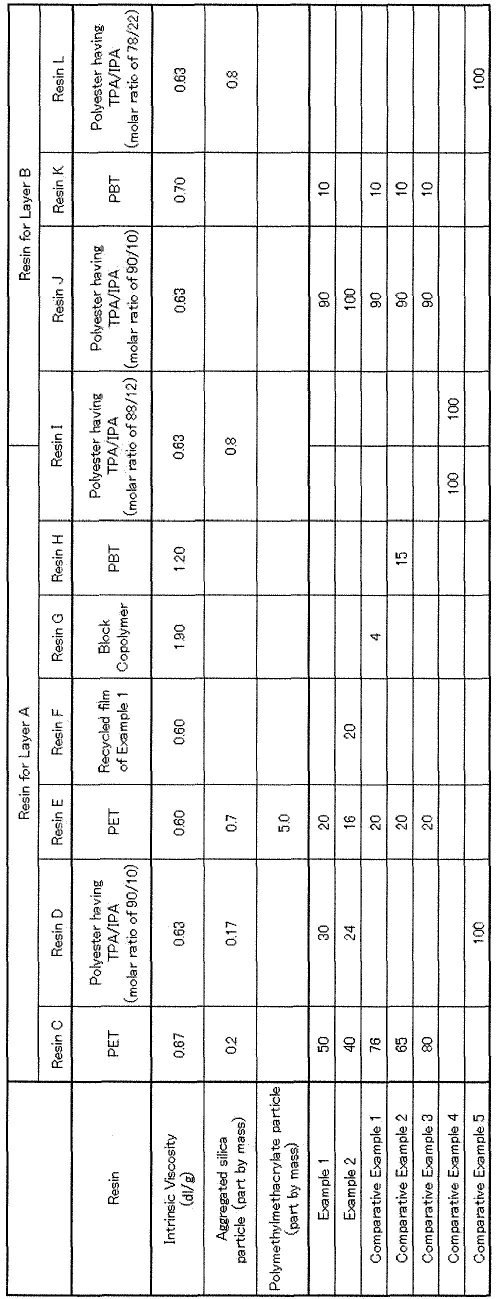

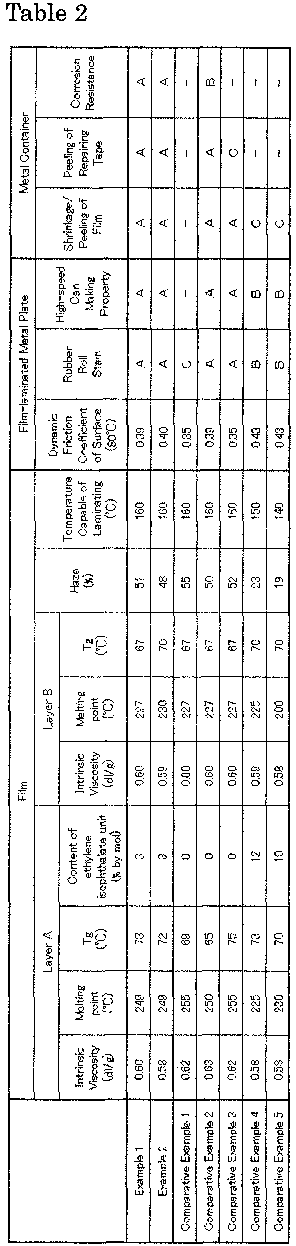

### INDUSTRIAL APPLICABILITY

The polyester-based film for laminating a metal plate of the present invention has excellent corrosion resistance, and can be adhered to a metal plate at a low temperature. Therefore, the polyester-based film for laminating a metal plate is excellent in can-making properties (for example, bending processing, joining, repair of joint part, flanging, attachment of top lid, filling of contents, attachment of bottom lid, retort sterilization), thus can be used for a wide range of applications of metal containers for coffee beverage, refreshing drink, canned food, and the like, and contributes greatly to the industries.

## Claims

1. A polyester-based film for laminating a metal plate constituted by two layers of Layer A and Layer B, wherein
a resin constituting Layer A is a polyester-based resin having a total content of ethylene terephthalate units and diethylene terephthalate units of not less than 95% by mol and not more than 98% by mol, in 100% by mol of total constituent units of the polyester, the resin constituting Layer A comprises not less than 2% by mol and riot more than 5% by mol of ethylene isophthalate units, in 100% by mol of the total constituent units of the polyester, and
a resin constituting Layer B comprises 80 to 100% by mass of a polyester-based resin (B1) having ethylene terephthalate units of not less than 80% by mol, in 100% by mol of the total constituent units of the polyester, and 0 to 20% by mass of a polyester-based resin (B2) having composition different from composition of the polyester-based resin (B1), and Layer B is used as a layer to be laminated on the metal plate side,
the total thicknesses of Layer A and Layer B is not less than 10 µm and not more than 25 µm, and Layer A and Layer B has a thickness ratio from 85:15 to 95:5.

2. The polyester-based film for laminating a metal plate according to claim 1 , wherein the polyester-based resin (B1) comprises not less than 5% by mol and not more than 15% by mol of ethylene isophthalate units, in 100% by mol of the total constituent units of the polyester.

3. The polyester-based film for laminating a metal plate according to claims 1 or 2, wherein the polyester-based resin (B1) comprises polyethylene terephthalate and polyethylene isophthalate.

4. The polyester-based film for laminating a metal plate according to any one of claims 1 to 3, wherein the polyester-based resin (B2) is polybutylene terephthalate.

5. The polyester-based film for laminating a metal plate according to any one of claims 1 to 4, wherein a temperature capable of laminating Layer B and a metal plate is not more than 200°C.

6. A film-laminated metal plate obtained by laminating Layer B of the polyester-based film according to any one of claims 1 to 5 on at least one surface of a metal plate.

7. A metal container obtained by molding the film-laminated metal plate according to claim 6.

8. Use of the polyester-based laminated metal plate in a 3-piece can, wherein the polyester-based film comprises two layers of Layer A and Layer B,
a resin constituting Layer A is a polyester-based resin having a total content of ethylene terephthalate units and diethylene terephthalate units of not less than 95% by mol and not more than 98% by mol, in 100% by mol of total constituent units of the polyester,
the resin constituting Layer A comprises not less than 2% by mol and not more than 5% by mol of ethylene isophthalate units, in 100% by mol of the total constituent units of the polyester, and
a resin constituting Layer B comprises 80 to 100% by mass of a polyester-based resin (B1) having ethylene terephthalate units of not less than 80% by mol, in 100% by mol of the total constituent units of the polyester, and 0 to 20% by mass of a polyester-based resin (B2) having composition different from composition of the polyester-based resin (B1), and Layer B is used as a layer to be laminated on the metal plate side,
the total thicknesses of Layer A and Layer B is not less than 10 µm and not more than 25 µm, and Layer A and Layer B has a thickness ratio from 85:15 to 95:5.

## Patentansprüche

1. Eine Folie auf Polyesterbasis zur Laminierung einer Metallplatte, die aus zwei Schichten der Schicht A und der Schicht B besteht, wobei
ein Harz, das Schicht A bildet, ein Harz auf Polyesterbasis mit einem Gesamtgehalt an Ethylenterephthalateinheiten und Diethylenterephthalateinheiten von nicht weniger als 95 Mol-% und nicht mehr als 98 Mol-%, in 100 Mol-% der gesamten konstituierenden Einheiten des Polyesters, ist,
das Harz, das Schicht A bildet, nicht weniger als 2 Mol-% und nicht mehr als 5 Mol-% an Ethylenisophthalateinheiten, in 100 Mol-% der gesamten konstituierenden Einheiten des Polyesters, umfasst, und
ein Harz, das Schicht B bildet, 80 bis 100 Massen-% eines Harzes auf Polyesterbasis (B1) mit Ethylenterephthalateinheiten von nicht weniger als 80 Mol-%, in 100 Mol-% der gesamten konstituierenden Einheiten des Polyesters, und 0 bis 20 Massen-% eines Harzes auf Polyesterbasis (B2) mit einer Zusammensetzung, die von der Zusammensetzung des Harzes auf Polyesterbasis (B1) verschieden ist, umfasst und Schicht B als Schicht verwendet wird, die auf der Seite der Metallplatte laminiert werden soll,
die Gesamtdicken von Schicht A und Schicht B nicht weniger als 10 µm und nicht mehr als 25 µm betragen und Schicht A und Schicht B ein Dickenverhältnis von 85:15 bis 95:5 aufweisen.

2. Die Folie auf Polyesterbasis zur Laminierung einer Metallplatte gemäß Anspruch 1, wobei das Harz auf Polyesterbasis (B1) nicht weniger als 5 Mol-% und nicht mehr als 15 Mol-% an Ethylenisophthalateinheiten, in 100 Mol-% der gesamten konstituierenden Einheiten des Polyesters, umfasst.

3. Die Folie auf Polyesterbasis zur Laminierung einer Metallplatte gemäß Anspruch 1 oder 2, wobei das Harz auf Polyesterbasis (B1) Polyethylenterephthalat und Polyethylenisophthalat umfasst.

4. Die Folie auf Polyesterbasis zur Laminierung einer Metallplatte gemäß einem der Ansprüche 1 bis 3, wobei das Harz auf Polyesterbasis (B2) Polybutylenterephthalat ist.

5. Die Folie auf Polyesterbasis zur Laminierung einer Metallplatte gemäß einem der Ansprüche 1 bis 4, wobei eine Temperatur, die Schicht B und eine Metallplatte laminieren kann, nicht mehr als 200°C beträgt.

6. Eine folienlaminierte Metallplatte, welche durch Laminieren von Schicht B der Folie auf Polyesterbasis gemäß einem der Ansprüche 1 bis 5 auf mindestens eine Oberfläche einer Metallplatte erhalten wird.

7. Ein Metallbehälter, welcher durch Formen der folienlaminierten Metallplatte gemäß Anspruch 6 erhalten wird.

8. Verwendung der auf Polyesterbasis laminierten Metallplatte in einer 3-teiligen Dose, wobei die Folie auf Polyesterbasis zwei Schichten der Schicht A und der Schicht B umfasst,
ein Harz, das Schicht A bildet, ein Harz auf Polyesterbasis mit einem Gesamtgehalt an Ethylenterephthalateinheiten und Diethylenterephthalateinheiten von nicht weniger als 95 Mol-% und nicht mehr als 98 Mol-%, in 100 Mol-% der gesamten konstituierenden Einheiten des Polyesters, ist,
das Harz, das Schicht A bildet, nicht weniger als 2 Mol-% und nicht mehr als 5 Mol-% an Ethylenisophthalateinheiten, in 100 Mol-% der gesamten konstituierenden Einheiten des Polyesters, umfasst, und
ein Harz, das Schicht B bildet, 80 bis 100 Massen-% eines Harzes auf Polyesterbasis (B1) mit Ethylenterephthalateinheiten von nicht weniger als 80 Mol-%, in 100 Mol-% der gesamten konstituierenden Einheiten des Polyesters, und 0 bis 20 Massen-% eines Harzes auf Polyesterbasis (B2) mit einer Zusammensetzung, die von der Zusammensetzung des Harzes auf Polyesterbasis (B1) verschieden ist, umfasst und Schicht B als Schicht verwendet wird, die auf der Seite der Metallplatte laminiert werden soll,
die Gesamtdicken von Schicht A und Schicht B nicht weniger als 10 µm und nicht mehr als 25 µm betragen und Schicht A und Schicht B ein Dickenverhältnis von 85:15 bis 95:5 aufweisen.

## Revendications

1. Film à base de polyester pour stratifier une plaque métallique, constitué de deux couches qui sont la couche A et la couche B, dans lequel
une résine constituant la couche A est une résine à base de polyester ayant une teneur totale en motifs téréphtalate d'éthylène et en motifs téréphtalate de diéthylène d'au moins 95 % en moles et du plus 98 % en moles, pour 100 % en moles du total des motifs constitutifs du polyester, la résine constituant la couche A comprend au moins 2 % en moles et au plus 5 % en moles de motifs isophtalate d'éthylène, pour 100 % en moles du total des motifs constitutifs du polyester, et
une résine constituant la couche B comprend 80 à 100 % en masse d'une résine à base de polyester (B1) ayant au moins 80 % en moles de motifs téréphtalate d'éthylène, pour 100 % en moles du total des motifs constitutifs du polyester, et 0 à 20 % en masse d'une résine à base de polyester (B2) ayant une composition différente de la composition de la résine à base de polyester (B1), et la couche B est utilisée en tant que couche devant être stratifiée sur le côté de la plaque métallique,
l'épaisseur totale de la couche A et de la couche B est non inférieure à 10 µm et non supérieure à 25 µm, et la couche A et la couche B ont un rapport d'épaisseur de 85/15 à 95/5.

2. Film à base de polyester pour stratifier une plaque métallique selon la revendication 1, dans lequel la résine à base de polyester (B1) comprend au moins 5 % en moles et au plus 15 % en moles de motifs isophtalate d'éthylène, pour 100 % en moles du total des motifs constitutifs du polyester.

3. Film à base de polyester pour stratifier une plaque métallique selon la revendication 1 ou 2, dans lequel la résine à base de polyester (B1) comprend du poly(téréphtalate d'éthylène) et du poly(isophtalate d'éthylène).

4. Film à base de polyester pour stratifier une plaque métallique selon l'une quelconque des revendications 1 à 3, dans lequel la résine à base de polyester (B2) est le poly(téréphtalate de butylène).

5. Film à base de polyester pour stratifier une plaque métallique selon l'une quelconque des revendications 1 à 4, dans lequel la température capable de stratifier la couche B et une plaque métallique n'est pas supérieure à 200°C.

6. Plaque métallique stratifiée avec un film obtenue par stratification de la couche B du film à base de polyester de l'une quelconque des revendications 1 à 5 sur au moins une surface d'une plaque métallique.

7. Récipient métallique obtenu par moulage de la plaque métallique stratifiée avec un film de la revendication 6.

8. Utilisation d'une plaque métallique stratifiée avec un film à base de polyester dans une canette en 3 parties, dans laquelle le film à base de polyester comprend deux couches qui sont la couche A et la couche B,
une résine constituant la couche A est une résine à base de polyester ayant une teneur totale en motifs téréphtalate d'éthylène et en motifs téréphtalate de diéthylène d'au moins 95 % en moles et au plus 98 % en moles, pour 100 % en moles du total des motifs constitutifs du polyester,
la résine constituant la couche A comprend au moins 2 % en moles et au plus 5 % en moles de motifs isophtalate d'éthylène, pour 100 % en moles du total des motifs constitutifs du polyester, et
une résine constituant la couche B comprend 80 à 100 % en masse d'une résine à base de polyester (B1) ayant au moins 80 % en moles de motifs téréphtalate d'éthylène, pour 100 % en moles du total des motifs constitutifs du polyester, et 0 à 20 % en masse d'une résine à base de polyester (B2) ayant une composition différente de la composition de la résine à base de polyester (B1), et la couche B est utilisée en tant que couche devant être stratifiée sur le côté de la plaque métallique,
l'épaisseur totale de la couche A et de la couche B est d'au moins 10 µm et au plus 25 µm, et la couche A et la couche B ont un rapport d'épaisseur de 85/15 à 95/5.
